(19) Europäisches Patentamt
European Patent Office
Office européen des brevets

(11) EP 0 897 407 B1

(12) # FASCICULE DE BREVET EUROPEEN

(45) Date de publication et mention de la délivrance du brevet:
**30.08.2000 Bulletin 2000/35**

(21) Numéro de dépôt: **97923143.8**

(22) Date de dépôt: **06.05.1997**

(51) Int Cl.⁷: **C08G 73/10**, H01M 8/10, H01M 8/02, C08J 5/22

(86) Numéro de dépôt international:
**PCT/FR97/00804**

(87) Numéro de publication internationale:
**WO 97/42253 (13.11.1997 Gazette 1997/49)**

(54) **POLYIMIDES SULFONES, MEMBRANES ET DISPOSITIF DE PILE A COMBUSTIBLE**
SULFONIERTE POLYIMIDE, MEMBRANE UND BRENNSTOFFZELLE
SULPHONATED POLYIMIDES, MEMBRANES AND FUEL CELL

(84) Etats contractants désignés:
**DE GB IT NL**

(30) Priorité: **07.05.1996 FR 9605707**

(43) Date de publication de la demande:
**24.02.1999 Bulletin 1999/08**

(73) Titulaires:
- **COMMISSARIAT A L'ENERGIE ATOMIQUE 75015 Paris (FR)**
- **CENTRE NATIONAL DE LA RECHERCHE SCIENTIFIQUE 75794 Paris Cédex 16 (FR)**

(72) Inventeurs:
- **FAURE, Sylvain F-38000 Grenoble (FR)**
- **PINERI, Michel F-38330 Montbonnot (FR)**
- **ALDEBERT, Pierre F-38340 Voreppe (FR)**
- **MERCIER, Régis F-69540 Irigny (FR)**
- **SILLION, Bernard F-69005 Lyon (FR)**

(74) Mandataire: **Des Termes, Monique et al Société Brevatome 3, rue du Docteur Lancereaux 75008 Paris (FR)**

(56) Documents cités:
**EP-A- 0 410 793**
**US-A- 4 574 144**
**US-A- 5 198 119**

- **PATENT ABSTRACTS OF JAPAN vol. 5, no. 75 (C-055), 19 Mai 1981 & JP 56 024007 A (NITTO ELECTRIC IND CO LTD)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 897 407 B1

## Description

La présente invention a trait à des polyamides sulfonés qui trouvent en particulier leur application dans la préparation de membranes échangeuses d'ions notamment par la fabrication de piles à combustible.

L'utilisation des électrolytes solides polymères a été proposée dans les années 1950, elle a été mise en oeuvre notamment pour construire des piles à combustible qui étaient en particulier destinées à alimenter en énergie des engins spatiaux.

L'intérêt des piles à combustible va maintenant au-delà des générateurs de puissance pour engins spatiaux et l'industrie automobile s'y intéresse pour au moins deux raisons :

- la première repose sur le souci d'éviter la pollution causée par les moteurs à combustion interne. Il est en effet clair que toutes les améliorations que l'on peut escompter par une meilleure maîtrise de la combustion éviteront difficilement tout rejet d'oxyde d'azote, d'hydrocarbures imbrûlés, et de composés oxygénés.
- la deuxième raison, pour un plus long terme, est la recherche de moteurs utilisant un combustible autre que les combustibles fossiles dont on sait qu'ils ne sont pas éternels.

Tout système basé sur l'hydrogène peut répondre aux préoccupations évoquées ci-dessus. Le gisement est potentiellement inépuisable et la combustion électrochimique ne produit que de l'eau.

L'assemblage schématique d'une pile à combustible, permettant à la fois la production d'énergie électrique, et accessoirement la synthèse d'eau pour les besoins de l'équipage d'un vaisseau spatial est représenté en partie sur la figure 1 jointe.

La membrane de type échangeuse d'ions formée d'un électrolyte solide polymère (1), sert à séparer le compartiment anodique (2) où se produit l'oxydation du combustible, tel que l'hydrogène $H_2$ (4) selon le schéma :

$$2H_2 \rightarrow 4H^+ + 4\ \bar{e}\ ;$$

du compartiment cathodique (3) où l'oxydant tel que l'oxygène $O_2$ (5) est réduit selon le schéma :

$$O_2 + 4H^+ + 4\ \bar{e} \rightarrow H_2O$$

avec production d'eau (6), tandis que l'anode et la cathode sont reliées par un circuit extérieur (10).

L'anode (7) et la cathode (8) sont constituées essentiellement d'un support poreux, par exemple en carbone sur lequel sont déposées des particules de métal noble tel que le platine.

L'ensemble membrane et électrode est un assemblage très mince d'une épaisseur de l'ordre du millimètre et chaque électrode est alimentée par l'arrière, à l'aide d'une plaque cannelée, par les gaz.

Un point très important est de bien maintenir la membrane dans un état d'humidité optimal, afin d'assurer une conductivité maximale.

Le rôle de la membrane est double. Il s'agit pour elle, d'une part d'être le polymère ionique permettant le transfert (9) de l'anode vers la cathode de protons hydratés $H_3O^+$, et d'autre part de maintenir dans son compartiment chacun des gaz oxygène et hydrogène.

Le polymère constituant la membrane doit donc remplir un certain nombre de conditions relatives à ses propriétés mécaniques, physico-chimiques et électriques.

Le polymère doit tout d'abord pouvoir donner des films minces, de 50 à 100 micromètres, denses, sans défauts. Les propriétés mécaniques, module de contrainte à la rupture, ductilité, doivent le rendre compatible avec les opérations d'assemblage comprenant par exemple un serrage entre des cadres métalliques.

Les propriétés doivent être préservées en passant de l'état sec à l'état humide.

Le polymère doit avoir une bonne stabilité thermique à l'hydrolyse et présenter une bonne résistance à la réduction et à l'oxydation jusqu'à 100°C. Cette stabilité s'apprécie en terme de variation de résistance ionique, et en terme de variation des propriétés mécaniques.

Le polymère doit enfin posséder une forte conductivité ionique, cette conductivité est apportée par des groupements acides forts tels que des groupements acides phosphoriques, mais surtout sulfoniques reliés à la chaîne du polymère. De ce fait, ces polymères seront généralement définis par leur masse équivalente, c'est-à-dire par le poids de polymère en gramme par équivalent acide.

A titre d'exemple, les meilleurs systèmes développés actuellement sont capables de fournir une puissance spécifique de 1 $W.cm^{-2}$, soit une densité de courant de 4 $A.cm^{-2}$ pour 0,5 Volts.

Depuis 1950, de nombreuses familles de polymères ou de polycondensats sulfonés ont été testés comme

membranes sans qu'il soit actuellement possible d'établir avec certitude des relations entre structure chimique, morphologie du film et performances.

On a tout d'abord mis en oeuvre des résines de type phénolique sulfonées préparées par sulfonation de produits polycondensés, tels que les polymères phénol-formaldéhyde.

Les membranes préparées avec ces produits sont peu coûteuses, mais n'ont pas une stabilité à l'hydrogène suffisante à 50-60°C pour des applications de longue durée.

On s'est ensuite tourné vers les dérivés du polystyrène sulfoné qui présentent une stabilité supérieure à celle des résines phénoliques sulfonées, mais ne peuvent être utilisés à plus de 50-60°C.

Les meilleurs résultats sont actuellement obtenus avec des copolymères dont la chaîne principale linéaire est perfluorée et dont la chaîne latérale porte un groupement acide sulfonique.

Ces copolymères sont disponibles dans le commerce sous la marque déposée de NAFION® de la Société Du Pont, ou ACIPLEX-S® de la Société Asahi Chemical, d'autres sont expérimentaux, produits par la Société DOW pour la fabrication de la membrane dénommée "XUS".

Ces produits ont fait l'objet de nombreux développements et conservent leurs propriétés plusieurs milliers d'heures entre 80 et 100°C avec des densités de courant dépendant des pressions partielles des gaz et de la température. La densité de courant est typiquement de 1 A.cm$^{-2}$ à 0,7 Volts pour le Nafion® 112 avec une épaisseur de 50 $\mu$m.

Les polymères de type Nafion® sont obtenus par copolymérisation de deux monomères fluorés dont l'un porte le groupement $SO_3H$. Une seconde voie en vue de l'obtention de membranes perfluorées a été explorée dans les documents de G.G. Scherer : Chimia, 48 (1994), p. 127-137 ; et de T. Monose et al : brevet US-A-4 605 685. Il s'agit du greffage sur des polymères fluorés de monomères styrènes ou fluoro styrènes qui sont ensuite sulfonés. Ces membranes ont cependant des propriétés voisines de celles des copolymères fluorés.

Si l'on tente de tirer un enseignement de l'art antérieur décrit ci-dessus, il apparaît que la meilleure structure chimique pour un polymère utilisable sous forme de membrane pour échange de protons correspond aux critères suivants :

- chaîne principale totalement perfluorée
- branchement portant un groupe sulfonique
- poids équivalent entre 800 et 1200

Les auteurs dans les documents de W. Grot ; Chem. Ing. Tech., 50, 299 (1978) et de G.G. Scherer : Phys. Chem., 94, 1008-1024 (1990) revendiquent pour ces structures de "très bonnes stabilités thermiques" ; cependant, il faut considérer que la notion de stabilité thermique doit ici être prise comme la capacité de résister à l'hydrolyse acide à une température comprise entre 60 et 100°C pendant plusieurs millieurs d'heures et que donc les indications de ces documents doivent être considérées avec prudence.

A cela, il convient d'ajouter la résistance à l'oxydation au contact de l'oxygène du compartiment cathodique et la résistance à la réduction en présence d'$H_2$.

D'autre part, dans l'optique du développement de piles à combustible utilisables pour la traction automobile, un autre problème essentiel, désormais bien identifié par les experts est le coût de la membrane.

En 1995, le coût des membranes produites ou en développement est de l'ordre de 3000 à 3500 F/m$^2$ et l'on estime qu'il faut diviser ce coût par 10, voire par 20 pour assister à un développement industriel des piles à combustible pour l'industrie automobile.

Dans une perspective d'abaissement des coûts, des poly 1,4-(diphényl-2,6)-phényléther sulfonés sur la chaîne principale, des polyéther-sulfones et polyéther-cétones ont été synthétisés et testés sans réellement rivaliser avec les membranes fluorées en ce qui concerne les performances instantanées et la durabilité.

En effet, la rigidité des chaînes rend ces produits insolubles et il devient difficile d'obtenir des films minces nécessaires à la réalisation des membranes.

Il existe donc un besoin non satisfait pour des polymères qui puissent être mis facilement sous la forme de membranes, à savoir de films minces qui remplissent les conditions déjà mentionnées ci-dessus relatives notamment à leurs propriétés mécaniques, physico-chimiques et électriques, en particulier en ce qui concerne leur stabilité thermique, leur résistance à l'hydrolyse acide, à température élevée pendant une longue durée, la résistance à l'oxydation au contact de l'oxygène ainsi que la résistance à la réduction en présence d'hydrogène.

Il existe en outre un besoin pour des membranes qui, tout en satisfaisant aux propriétés ci-dessus, puissent être fabriquées à faible coût, par un procédé simple avec des matières premières facilement disponibles.

La présente invention a pour but de fournir un polymère qui satisfasse l'ensemble des besoins précités.

L'invention a en outre pour but de fournir des membranes comprenant ou préparées avec ce polymère et un dispositif de pile à combustible comprenant ces membranes.

Ces buts et autres encore sont remplis, conformément à l'invention par un polyimide comprenant des motifs récurrents de formule ($I_n$)

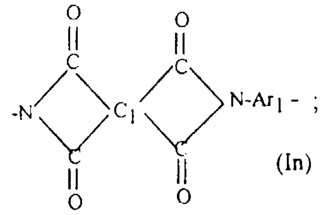

(In)

et des motifs récurrents de formule (Im)

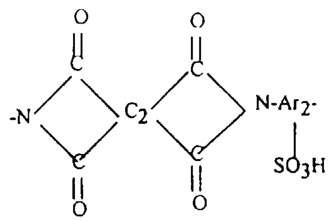

; (Im)

dans lesquelles ;

- les groupes $C_1$ et $C_2$ peuvent être identiques ou différents et représentent chacun un groupe tétravalent comprenant au moins un cycle aromatique carboné éventuellement substitué ayant de 6 à 10 atomes de carbone et/ou un hétérocycle à caractère aromatique éventuellement substitué ayant de 5 à 10 atomes et comprenant un ou plusieurs hétéroatomes choisis parmi S, N et O ; $C_1$ et $C_2$ formant chacun avec les groupes imides voisins des cycles à 5 ou 6 atomes.

Les groupes $Ar_1$ et $Ar_2$ peuvent être identiques ou différents et représentent chacun un groupe divalent comprenant au moins un cycle aromatique carboné éventuellement substitué ayant de 6 à 10 atomes de carbone et/ou un hétérocycle à caractère aromatique éventuellement substitué ayant de 5 à 10 atomes et comprenant un ou plusieurs hétéroatomes choisis parmi S, N et O ; au moins un desdits cycles aromatiques carbonés et/ou hétérocycle de $Ar_2$ étant en outre substitué par au moins un groupe acide sulfonique.

Le motif récurrent (In) est répété k fois et le motif récurrent (Im) est répété k fois, j et k étant deux nombres entiers.

De préférence, j représente un nombre entier de 1 à 200, de préférence encore de 4 à 60, et k représente un nombre entier de 1 à 300, de préférence de 4 à 120.

Le copolymère selon l'invention peut, selon la position des deux motifs qui le composent être défini comme étant un copolymère séquencé, alterné, ou statistique.

Le polyimide selon l'invention qui peut être défini comme un copolyimide sulfoné répond cependant de préférence à la formule générale suivante (I) :

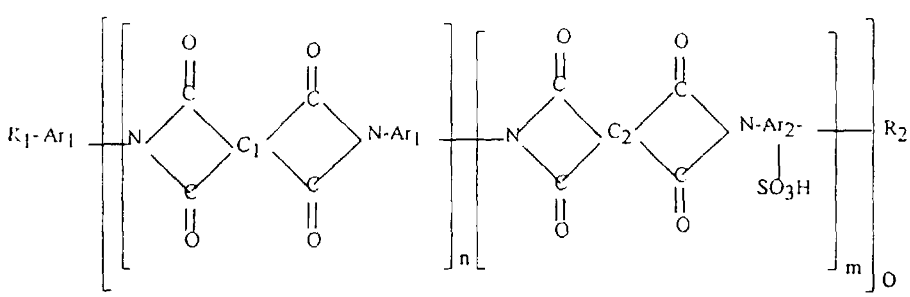

(I)

dans laquelle $C_1$, $C_2$, $Ar_1$ et $Ar_2$ ont la signification déjà donnée ci-dessus et où chacun des groupes $R_1$ et $R_2$ représente

$NH_2$ ou un groupe de formule

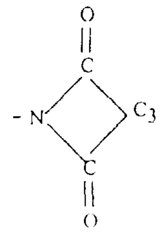

où $C_3$ est un groupe divalent comprenant au moins un cycle aromatique carboné éventuellement substitué ayant de 6 à 10 atomes de carbone et/ou un hétérocycle à caractère aromatique éventuellement substitué ayant de 5 à 10 atomes et comprenant un ou plusieurs hétéroatomes choisis parmi S, N et O,

$C_3$ formant avec le groupe imide voisin un cycle à 5 ou 6 atomes.

Dans la formule (I) ci-dessus :

- m représente un nombre entier de préférence de 1 à 20, de préférence encore de 2 à 10 ;
- n représente un nombre entier de préférence de 1 à 30, de préférence encore de 2 à 20 .
- o représente un nombre entier de préférence de 1 à 10, de préférence encore de 2 à 6.

Le poids moléculaire du polyimide selon l'invention est généralement de 10 000 à 100 000, de préférence de 20 000 à 80 000 .

Le poids moléculaire équivalent du polyimide selon l'invention est de préférence de 400 à 2500, de préférence encore de 500 à 1200.

De ce fait , les nombres m et n (j et k) seront choisis de près de telle sorte que le poids moléculaire équivalent soit de 400 à 2500, de préférence encore de 500 à 1200 le poids moléculaire équivalent ayant été défini ci-dessus.

De manière générale, il est connu que les polymères hétérocycliques et en particulier les polyimides peuvent permettre l'obtention de films grâce à leur synthèse en deux étapes.

Ces polymères "hétérocycliques" sont utilisés par exemple pour des applications aéronautiques et spatiales qui requièrent d'excellentes propriétés mécaniques et une bonne résistance à l'oxydation. Ces applications sont très éloignées du domaine de la présente demande

Les copolyimides sulfoniques spécifiques de la présente invention présentent de manière étonnante, toutes les propriétés déjà citées ci-dessus nécessaires à la réalisation de membranes, en particulier de membranes échangeuses de cations, notamment pour piles à combustibles dont les performances sont compatibles avec les applications envisagées.

En particulier, les copolymères spécifiques selon l'invention peuvent être facilement mis sous la forme de films ou de membranes d'une épaisseur adéquate.

Les polymères selon l'invention ont une capacité d'échange d'ions très élevée supérieure à 0,4 méq/g, par exemple de 0,8 à 2,5 meq/g, ce qui est supérieur à la capacité d'échange d'ions des polymères de l'art antérieur qui n'atteint généralement au maximum que 0,9 à 1,2 meq/g.

Les membranes comprenant les polymères selon l'invention ont également une grande stabilité thermique, par exemple à l'hydrolyse acide à haute température, c'est-à-dire pour les membranes les plus stables jusqu'à une température pouvant atteindre par exemple 100°C, et ce pendant une longue durée pouvant atteindre par exemple 5000 heures.

Ces conditions sont les conditions d'utilisation pouvant survenir dans les piles où les membranes sont mises en oeuvre.

De même, les membranes selon l'invention ont d'excellentes résistance à la réduction et à l'oxydation.

L'invention se démarque ainsi totalement de l'art antérieur cité ci-dessus dans lequel les polymères préconisés pour la fabrication de membranes pour l'échange de cations et en particulier de protons, notamment pour piles à combustible ont une structure fondamentalement différente de celles des polymères de type polyimide de la présente demande.

La présente demande s'écarte radicalement et de manière surprenante de la démarche de l'art antérieur en préparant en vue de leur utilisation dans des membranes échangeuses de cations des polyimides spécifiques.

En effet, de manière générale, les polyimides n'ont été ni mentionnés ni suggérés par une mise en oeuvre dans ce domaine, d'autre part les polyimides spécifiques selon l'invention présentent des propriétés mécaniques, physico-chimiques et électriques supérieures à celles des polymères de l'art antérieur comme cela est démontré plus loin.

Rien ne laissait supposer que les polyimides selon l'invention allaient totalement satisfaire aux besoins exprimés et jusqu'alors non satisfaits pour la préparation de membranes échangeuses de cations.
Enfin, comme décrit plus loin, les polyimides selon l'invention sont préparés de manière simple, par des procédés éprouvés sur le plan industriel et à partir de matières premières disponibles et de faible coût. De ce fait, les membranes obtenues ainsi que les piles à combustibles comprenant ces membranes voient également leur prix fortement diminué.
L'invention va maintenant être décrite plus en détail en référence aux dessins joints dans lesquels :

- la figure 1 représente schématiquement une pile à combustible et son assemblage électrode-membrane-électrode.

La membrane pouvant être notamment une membrane comprenant un polymère selon la présente invention.

- La figure 2 représente un graphique avec en ordonnée la tension exprimée en mV et en abscisse la densité de courant exprimée en A/$cm^2$ dans lequel sont portées les courbes de polarisation obtenues avec des électrodes "E-TEK" non collées (0,35 mg de Pt/$cm^2$ et 0,8 mg de Nafion®/$cm^2$) et respectivement, une membrane en Nafion®117 (courbe en traits pointillés), et une membrane en polyimide phtalique de la présente invention (courbe en trait plein), la température de fonctionnement de la pile de 50°C et les pressions de $H_2$ et de $O_2$ étant de 4 bars.
- la figure 3 est un graphique analogue à celui de la figure 2, mais les courbes de polarisation sont celles obtenues d'une part avec une membrane en Nafion®117 (courbe en traits pointillés), et d'autre part avec une membrane en polyimide naphtalénique ce la présente invention (courbe en trait plein), et la température de fonctionnement de la pile est de 70°C.

Dans les formules (In), (Im) et (I) citées ci-dessus, $C_1$ et $C_2$ peuvent être identiques ou différents et représentent chacun, par exemple, un cycle benzénique éventuellement substitué, par un ou deux substituant(s) choisi(s) parmi les groupes alkyles et alkoxy de 1 à 10 C et les atomes d'halogène ; ou plusieurs cycles benzéniques éventuellement substitués par un ou plusieurs substituant(s) choisi(s) parmi les groupes alkyles et alkoxy de 1 à 10 C et les atomes d'halogène, par exemple de 2 à 4 cycles, reliés entre eux par une simple liaison ou par un groupe divalent.
Ledit groupe divalent est choisi par exemple parmi :

- un groupe divalent dérivé d'un groupe alkyle linéaire ou ramifié (par exemple un groupe alkylidène ou alkylène) de 1 à 10 C éventuellement substitué, de préférence sur le même carbone, par un ou plusieurs halogènes choisis parmi F, Cl, Br et I et/ou par un ou plusieurs groupes hydroxyle(s), de préférence encore ledit groupe divalent est un groupe divalent dérivé d'un groupe alkyle perfluoré, par exemple alkylène perfluoré.
- un hétéroatome choisi parmi O, S ;
- un groupe

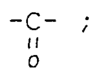

un groupe

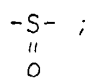

un groupe

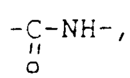

un groupe

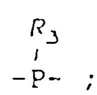

un groupe

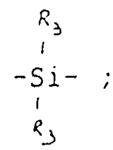

un groupe

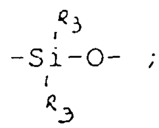

où R3 est choisi parmi les groupes alkyles de 1 à 10 C tels que méthyle, éthyle, isopropyle, etc.

$C_1$ et $C_2$ peuvent également chacun représenter un groupe carboné polycyclique condensé éventuellement substitué par un ou plusieurs substituant(s) choisi(s) parmi les groupes alkyles et alkoxy de 1 à 10 C et les atomes d'halogène, comprenant par exemple de 2 à 5 cycles benzéniques choisis par exemple parmi le naphtalène, le phénanthrène, le coronène, le pérylène, etc.

$C_1$ et $C_2$ peuvent aussi représenter un hétérocycle ou un hétérocycle condensé, à caractère aromatique tel que thiophène, pyrazine, pyridine, furanne, quinoléine, quinoxaline, isobenzofuranne, cet hétérocycle étant éventuellement substitué par un ou plusieurs substituants choisis parmi les groupes allyles (par exemple méthyle, éthyle, isopropyle, etc.) et alkoxy de 1 à 10 C, et les atomes d'halogènes (F, Cl, Br, I).

Parmi les polyimides utilisables dans le cadre de l'invention, on citera ceux dans lesquels $C_1$ est un cycle benzénique et $C_2$ un ensemble de deux cycles benzéniques reliés entre eux par un pont oxygène ; ou $C_1$ est constitué par des cycles benzéniques, de préférence encore par deux cycles benzéniques reliés entre eux par un ou des groupe(s) perfluoroalkylène(s) et $C_2$ est constitué par des cycles benzéniques, de préférence encore par deux cycles benzéniques reliés par un ou des groupe(s) perfluoroalkyle(s) divalent(s) ou perfluoroalkylène(s) ; ou $C_1$ est un cycle benzénique et $C_2$ un cycle naphtalénique ; ou $C_1$ et $C_2$ sont tous deux des cycles naphtaléniques.

$Ar_1$ et $Ar_2$ peuvent être identiques ou différents et représentent chacun par exemple un cycle benzénique divalent à enchaînement meta, ou para ; éventuellement substitué par un ou plusieurs substituants choisis parmi les groupes alkyles et alkoxy de 1 à 10 C tels que méthyle, éthyle, isopropyle, butyle, méthoxy.... et les atomes d'halogène ; ou plusieurs cycles benzéniques éventuellement substitués par un ou plusieurs substituants choisis parmi les groupes alkyles et alkoxy de 1 à 10C et les atomes d'halogènes, par exemple de 2 à 5 cycles, reliés entre eux par une simple liaison ou par un groupe divalent.

Ledit groupe divalent est choisi par exemple parmi :

- un groupe divalent dérivé d'un groupe alkyle linéaire ou ramifié (par exemple un groupe alkylidène ou alkylène) de 1 à 10 C éventuellement substitué, de préférence sur le même carbone par un ou plusieurs halogènes choisis parmi F, Cl, Br et I et/ou par un ou plusieurs groupes hydroxyle(s), de préférence encore ledit groupe divalent est un groupe divalent dérivé d'un groupe alkyle perfluoré, par exemple alkylène perfluoré.
- un hétéroatome choisi parmi O, S ;
- un groupe

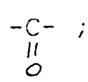

un groupe

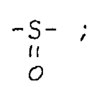

un groupe

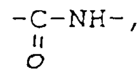

un groupe

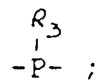

un groupe

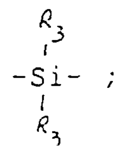

un groupe

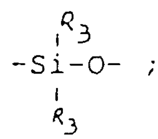

où $R_3$ est choisi parmi les groupes alkyles de 1 à 10 C tels que méthyle, éthyle, isopropyle, etc.

$Ar_1$ et $Ar_2$ peuvent également chacun représenter un groupe carboné polycyclique condensé éventuellement substitué par un ou plusieurs substituant(s) choisi(s) parmi les groupes alkyles et alkoxy de 1 à 10 C et les atomes d'halogène, comprenant par exemple de 2 à 5 cycles benzéniques, choisis par exemple parmi le naphtalène, le phénanthrène, le coronène, le pérylène, etc.

$Ar_1$ et $Ar_2$ peuvent aussi représenter un hétérocycle ou un hétérocycle condensé à caractère aromatique par exemple thiophène, pyrazine, pyridine, furanne, quinoléine, quinoxaline, isobenzofuranne, cet hétérocycle étant éventuellement substitué par un ou plusieurs substituant(s) choisi(s) parmi les groupes alkyles, et alkoxy de 1 à 10 C, par exemple méthyle, éthyle, isopropyle, méthoxy, et les atomes d'halogènes (F, Cl, Br, I).

Selon l'invention, au moins un des cycles de $Ar_2$, par exemple benzéniques ou polyphényliques ou autres est substitué en outre par un ou plusieurs groupe(s) acide sulfonique.

Les polyimides préférés sont ceux dans lesquels $Ar_1$ est un groupe diphénylméthane et $Ar_2$ est un groupe biphényl-disulfonique; ou $Ar_1$ est un groupe benzénique, et $Ar_2$ un groupe biphényl-disulfonique; ou $Ar_1$ est un groupe diphényléther, et $Ar_2$ est un groupe biphényl-disulfonique.

$C_3$ est par exemple un cycle benzénique ou naphtalénique éventuellement substitué par un ou plusieurs substituant(s) choisi(s) parmi les groupes alkyles et alkoxy de 1 à 10 C et les atomes d'halogène.

Des exemples des groupes $C_1$ et $C_2$ sont les suivants :

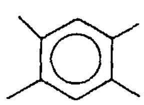 ; 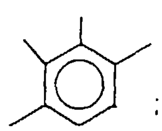 ;

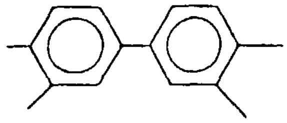 ; 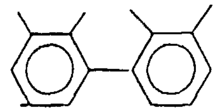 ;

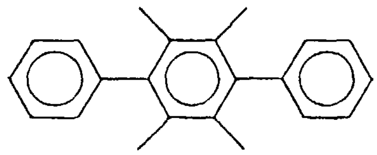 ; 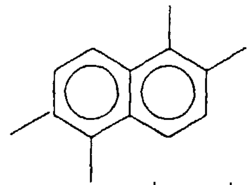 ;

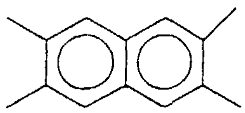 ; 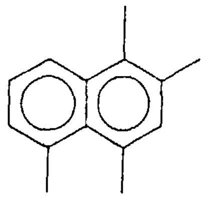 ; 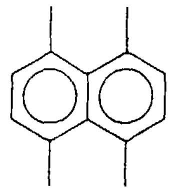 ;

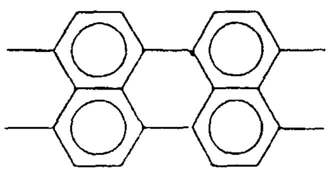 ; 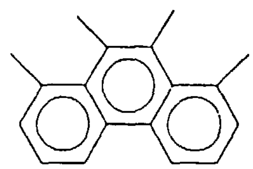 ;

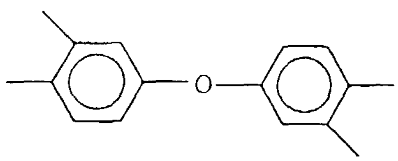 ; 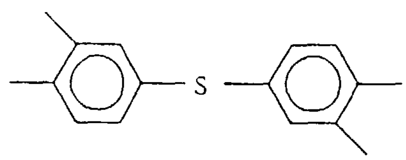

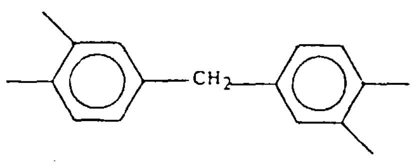 ; 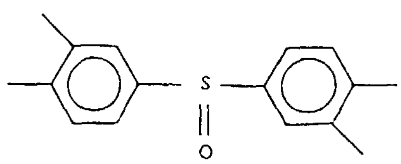 ;

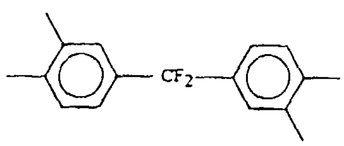 ; 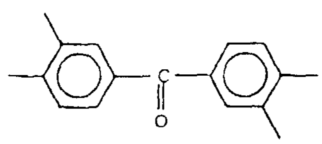 ;

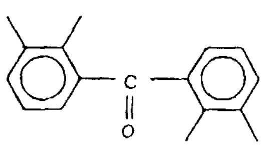 ; 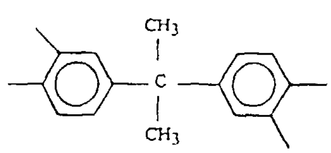 ;

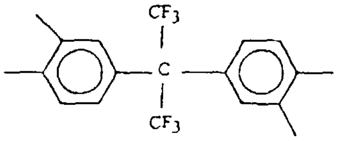 ; 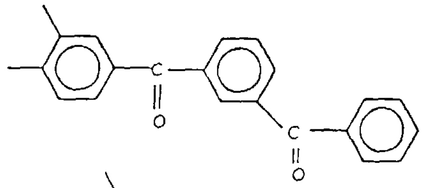 ;

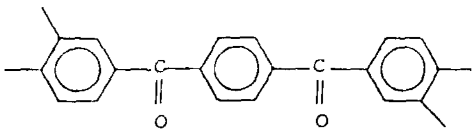 ; 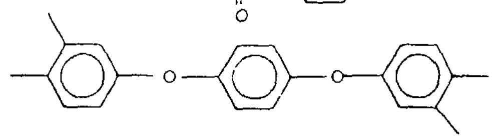 ;

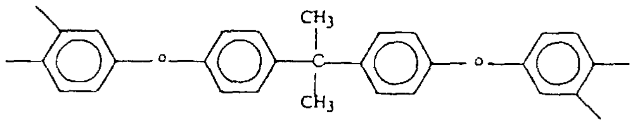 ; 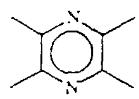 ;

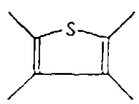 ; 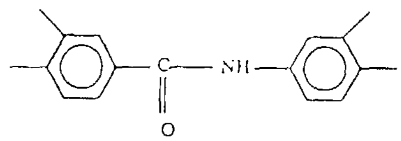

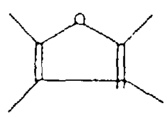

Des exemples des groupes $Ar_1$ sont les suivants :

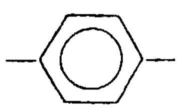 ; 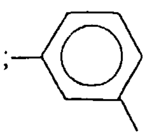 ; 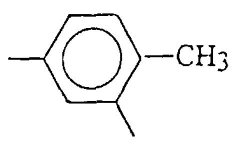 ; 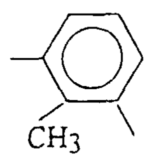 ;

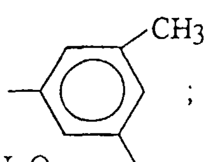 ; 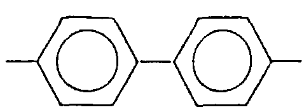 ; 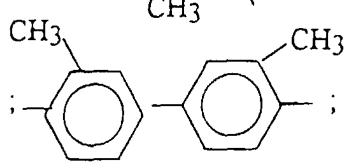 ;

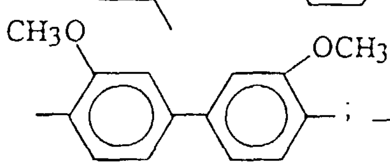 ; 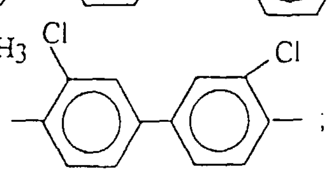 ; 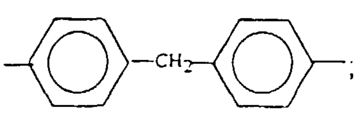 ;

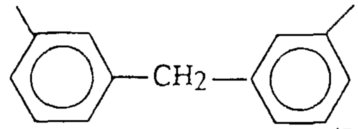 ; 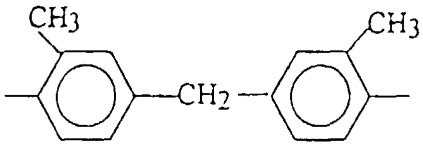 ;

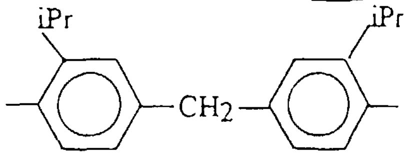 ; 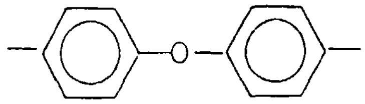 ;

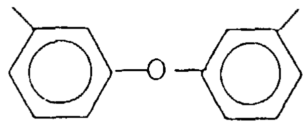 ; 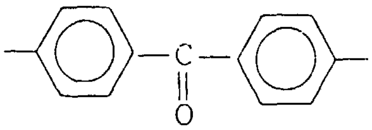 ;

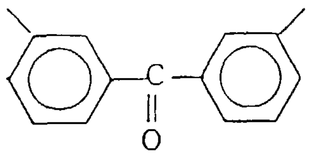 ; 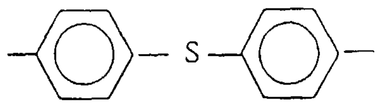 ;

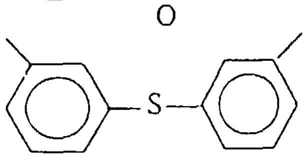 ; 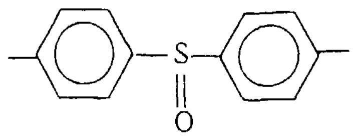 ;

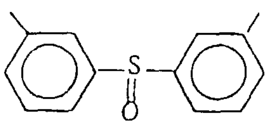 ; 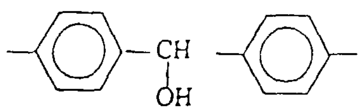 ;

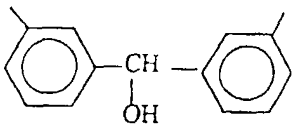 ; 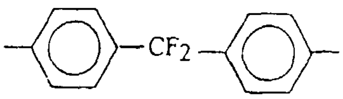 ;

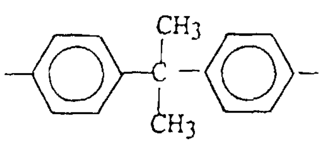 ; 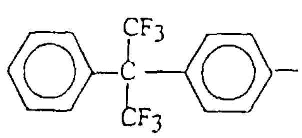 ;

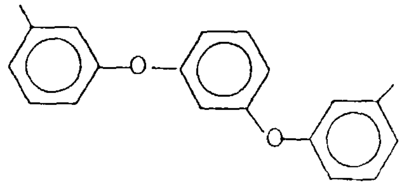 ; 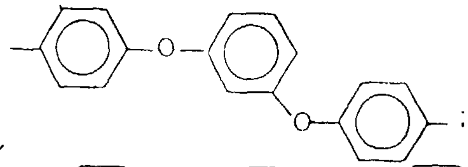 ;

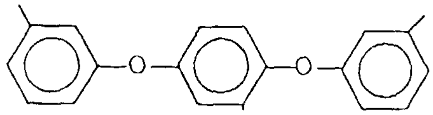 ; 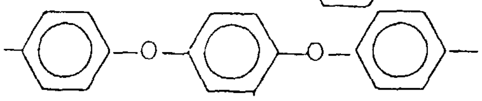

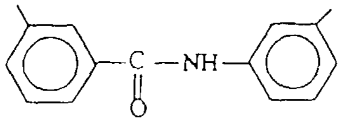 ; 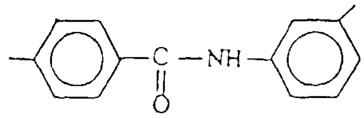 ;

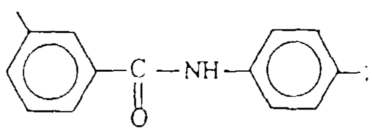 ; 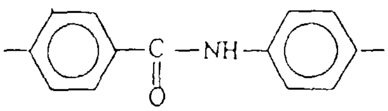 ;

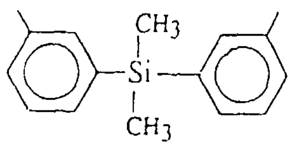 ; 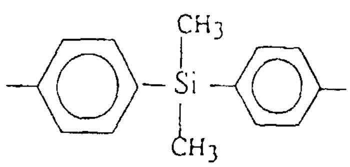 ;

Des exemples des groupes $Ar_2$ sont les suivants :

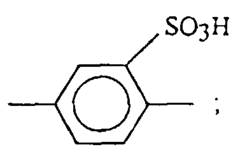 ; 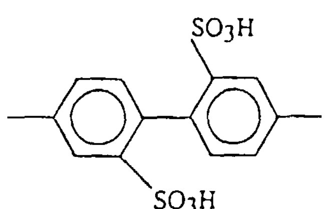

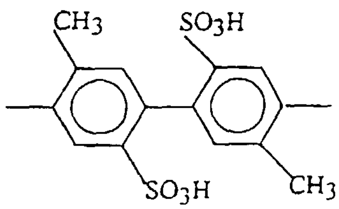

Parmi les groupes $Ar_2$, on peut également citer l'un quelconque des groupes $Ar_1$ cités ci-dessus portant en outre un ou plusieurs groupe(s) $SO_3H$ sur son ou ses cycle(s) et/ou hétérocycle(s).

Des exemples des groupes $C_3$ sont les suivants :

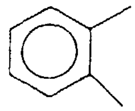 ; 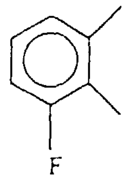 ; 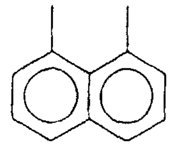

Les polyimides objet de l'invention peuvent être obtenus par tous les procédés connus de l'homme du métier pour la préparation des polyimides en général.

Des exemples des procédés connus de préparation des polyimides sont notamment les suivants :

- réaction d'un dianhydride et d'une diamine,
- réaction d'un diacide diester et d'une diamine,

Il est bien évident que les polyimides selon l'invention peuvent être préparés par des procédés qui dérivent des procédés cités ci-dessus ou par d'autres procédés pouvant être mis en oeuvre pour la synthèse des polyimides.

Les adaptations et optimisations nécessaires des procédés connus et décrits dans la littérature peuvent être aisément réalisés par l'homme du métier.

On utilisera de préférence pour préparer les polyimides selon l'invention, la condensation des dianhydrides sur les diamines par une synthèse en deux étapes.

Un tel procédé est couramment mis en oeuvre sur le plan industriel et ne nécessite que de légères adaptations pour permettre la préparation des polyimides selon l'invention.

La synthèse d'un polyimide de condensation répond ainsi généralement au schéma suivant en deux étapes :

Dans une première étape, on effectue la réaction de condensation d'un dianhydride et d'une diamine pour obtenir un polyamide-acide intermédiaire de formule (VI) dit "prépolymère" selon le schéma ci-dessous donné pour le premier type de motif récurrent des polyimides de l'invention :

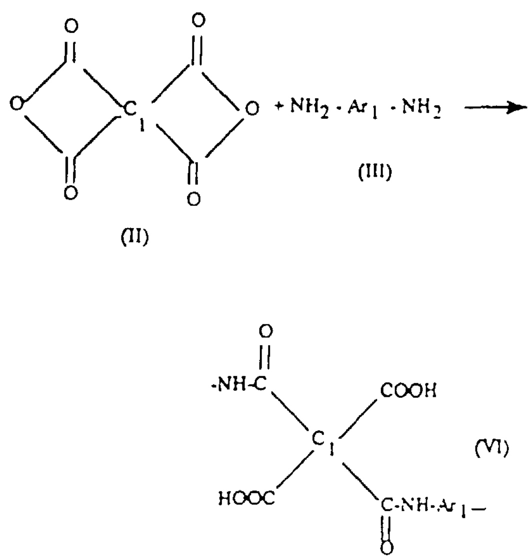

(II) (III) (VI)

- ou selon le schéma ci-dessous pour le deuxième type de motif récurrent des polyimides selon l'invention :

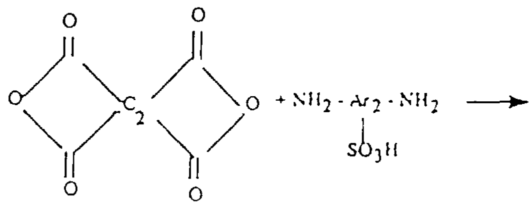

(II') (IV)

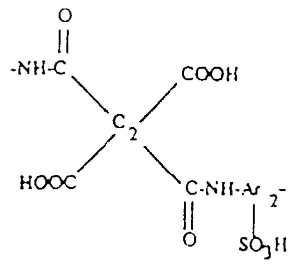

(VII)

Les produits de départ, que ce soient les dianhydrides (II) (II') ou les diamines bi primaires (III) (IV) sont des produits facilement disponibles et, pour la plupart, d'un faible coût.

De ce fait, et conformément à l'une des caractéristiques particulièrement intéressante de la présente demande, les polymères préparés, et par voie de conséquence les membranes obtenues à partir de ces polymères présentant un coût relativement faible : de l'ordre par exemple d'un facteur 10, ce qui est nettement inférieur aux membranes de l'art antérieur actuellement utilisées notamment dans les piles à combustible.

On peut ainsi envisager une réduction concomittante du prix de revient des piles à combustible ouvrant à celles-ci des applications dans des domaines tels que celui de l'énergie pour les automobiles dont elles étaient jusqu'alors écartées du fait de leur coût excessif.

Parmi les dianhydrides de formule générale (II) :

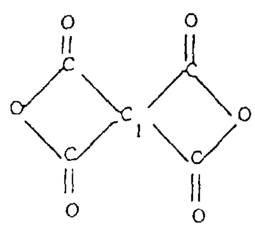

(II)

où $C_1$ a la signification déjà donnée ci-dessus.

On peut citer à titre d'exemple les dianhydrides des acides aromatiques tétracarboxyliques suivants : l'acide benzène tétracarboxylique-1,2,3,4, l'acide benzène tétracarboxylique-1,2,4,5, l'acide biphényle-1,1'tétracarboxylique-2,3',5',6' l'acide biphényle-1,1'tétracarboxylique-3,3',4,4', l'acide biphényle-1,1'tétracarboxylique-2,2',3,3', l'acide terphényle-1,1',1" tétracarboxylique-2',3',5',6', l'acide naphtalène tétracarboxylique-1,2,5,6, l'acide naphtalène tétracarboxylique-2,3,6,7, l'acide naphtalène tétracarboxylique-1,2,4,5, l'acide naphtalène tétracarboxylique-1,4,5,8, l'acide pérylène tétracarboxylique-3,4,9,10, l'acide phénanthrène tétracarboxylique-1,8,9,10, l'acide oxybis-(benzène dicarboxylique-1,2)-4,4', l'acide thiobis-(benzène dicarboxylique-1,2)-4,4', l'acide sulfonylbis(benzène dicarboxylique-1,2)-4,4', l'acide méthylènebis(benzène dicarboxylique-1,2)-4,4', l'acide difluorométhylène-bis (benzène dicarboxylique-1,2)-4,4', l'acide carbonylbis(benzène dicarboxylique-1,2)-3,3', l'acide carbonylbis (benzène dicarboxylique-1,2)-4,4', l'acide méthyl-1 éthylidène-1,1-bis (benzène dicarboxylique-1,2)-4,4', l'acide trifluorométhyl-1 trifluoro-2,2,2 éthylidène-1,1-bis (benzène dicarboxylique-1,2)-4,4', l'acide phénylène-1,3-bis (carbonylbenzène dicarboxylique-1,2)-4,4', l'acide phénylène-1,4-bis (carbonylbenzène dicarboxylique-1,2)-4,4', l'acide phénylène-1,3-bis (oxybenzène dicarboxylique-1,2)-4,4', l'acide phénylène-1,4-bis (oxybenzène dicarboxylique-1,2)-4,4', l'acide méthyl-1 éthyldène-1,1-bis (phénylène-1,4-oxy)-bis (benzène dicarboxylique-1,2)-4,4', l'acide pyrazine tétracarboxylique-2,3,5,6, l'acide thiophène tétracarboxylique-2,3,4,5 et le tétracarboxy-3,3',4,4' benzanilide.

Les dianhydrides de formule générale (II')

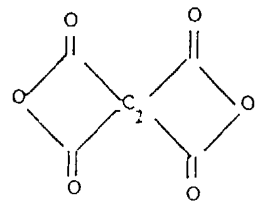

(II')

où $C_2$ a la signification déjà donnée ci-dessus peuvent être choisis parmi les mêmes composés cités plus haut pour les dianhydrides de formule (II).

Parmi les diamines biprimaires de formule (III) $H_2N-Ar_1-NH_2$ où $Ar_1$ a la signification déjà donnée ci-dessus et que l'on peut utiliser dans la préparation des polyimides de l'invention, on peut citer par exemple la benzènediamine-1,3, la benzènediamine-1,4, la méthyl-6 benzènediamine-1,3, la méthyl-2 benzènediamine-1,3, la méthyl-5 benzènediamine-1,3, le diamino-4,4' biphényle-1,1', le diamino-4,4' diméthyl-3,3' biphényle-1,1', le diamino-4,4' diméthoxy-3,3' biphényle-1,1', le diamino-4,4' dichloro-3,3' biphényle-1,1', la méthylènebis (benzèneamine)-4,4', la méthylènebis (benzèneamine)-3,3', la méthylènebis (méthyl-3 benzèneamine)-4,4', la méthylènebis (isopropyl-3 benzèneamine)-4,4', l'oxybis (benzèneamine)-4,4', l'oxybis (benzèneamine)-3,3', la carbonylbis (benzèneamine)-4,4', la carbonylis (benzéneamine)-3,3', la thiobis (benzèneamine)-4,4', la thiobis (benzèneamine)-3,3', la sulfonybis (benzèneamine)-4,4', la sulfonylbis (benzèneamine)-3,3', l'hydroxyméthylènebis (benzèneamine)-4,4', l'hydroxyméthylènebis (benzène-amine)-3,3', la difluorométhylènebis(benzèneamine)-4,4', la méthyl-1 éthylidène bis (benzèneamine)-4,4', la trifluorométhyl-1 trifluoro-2,2,2 éthylidène bis (benzèneamine)-4,4', la phénylène-1,3-dioxy bis (benzèneamine)-3,3', la phénylène-1,3-dioxy bis (benzèneamine)-4,4', la phénylène-1,4-dioxy bis (benzèneamine)3,3', la phénylène-1, 4-dioxy bis (benzèneamine)-4,4', le diamino-3,3' benzanilide, le diamino-3,4' benzanilide, le diamino-3',4 benzanilide, le diamino-4,4' benzanilide, le bis (amino-3 phényle) diméthylsilane le bis (amino-4-phényle) diméthylsilane et le 9 fluor 9 ylidène bisphénylamine.

Parmi les diamines biprimaires sulfonées de formule (IV)

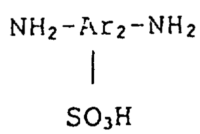

(IV)

où $Ar_2$ a la signification déjà donnée ci-dessus, et que l'on peut utiliser dans le cadre de la préparation des polyamides de l'invention. On peut citer par exemple l'acide 1,4 diaminobenzène-3 sulfonique, l'acide 4,4'-diamino 1,1'-biphényl-di-2,2'-sulfonique.

La condensation des dianhydrides sur les diamines peut se faire, dans le cadre de l'invention, avec ou sans agent limiteur de chaîne.

Toutefois, on préfère utiliser un agent limiteur de chaîne, de préférence de type anhydride, car on évite ainsi la présence en fin de la chaîne polymère d'un groupement amine facilement oxydable.

Parmi les agents limiteurs de chaîne de type anhydride qui conviennent pour préparer les polyimides selon l'invention, on peut citer les anhydrides fonctionnels de formule (V) suivante :

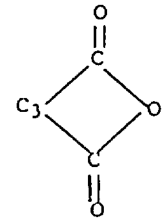

(V)

où $C_3$ a la signification déjà donnée ci-dessus.

Des exemples des anhydrides de formule (V) sont les anhydrides phtalique et 3-fluorophtalique, l'anhydride naphtalène-1,8-dicarboxylique....

Dans une deuxième étape, on effectue la synthèse du polyimide proprement dit selon le schéma suivant donné à titre d'exemple pour le premier type de motif récurrent ;

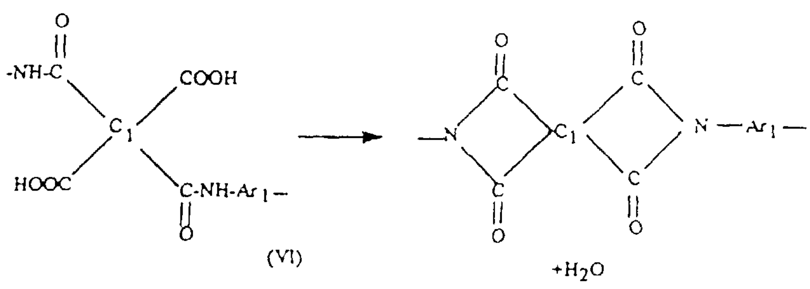

Dans la première étape du procédé de préparation des polyimides selon l'invention, on peut dissoudre les réactifs de base dans un solvant approprié.

Le solvant peut être tout solvant adéquate connu de l'homme du métier comme convenant à la réaction de polycondensation d'un dianhydride et d'une diamine.

Dans un mode de réalisation préféré, le solvant est un solvant aprotique polaire choisi par exemple parmi le diméthylformamide, le diméthylacétamide, la N-méthylpyrrolidone, seuls ou en mélange avec par exemple des solvants aromatiques tels que le xylène ou des solvants du type éther de glycol.

Le solvant peut aussi être un solvant de type phénolique, c'est-à-dire qu'il est choisi par exemple parmi le phénol, les phénols substitués par un ou plusieurs halogènes (Cl, I, Br, F), les crésols (o-, m-, et p-crésol), les crésols substitués par un halogène (Cl, I, Br, F) et les mélanges de ceux-ci.

Des solvants préférés seront constitués par le m-crésol et un mélange de para-chloro-phénol ou de méta-chloro-phénol et de phénol, par exemple dans les proportions de 20 % de phénol et de 80 % de para ou métachlorophénol.

Par réactifs, on entend les composés (II), (III), (II') (IV) et éventuellement (V) déjà décrits ci-dessus. On peut par exemple commencer par faire réagir, en tant que réactifs initialement présents dans le mélange un dianhydride (II) et/ou un dianhydride (II') avec une diamine sulfonée (IV), puis rajouter ensuite la deuxième diamine (III).

Toutes les combinaisons possibles concernant l'ordre d'addition des réactifs peuvent facilement être déterminées par l'homme du métier.

La réaction de condensation de la 1ère étape s'effectue dans le solvant généralement dès la température ordinaire, par exemple 20-25°C et il se forme le polyamide-acide intermédiaire ou prépolymère.

Le polyamide acide intermédiaire obtenu peut être utilisé par exemple pour préparer un film par exemple par coulée ; le solvant est ensuite évaporé à une température de 50 à 150°C pour donner un polyamide acide final et le polyimide selon l'invention est obtenu conformément à la deuxième étape soit par traitement thermique à une température inférieure à 250°C (c'est-à-dire inférieure à la température de désulfonation) soit par déshydratation chimique en utilisant l'anhydride acétique.

Une autre alternative préférée consiste à chauffer la solution de départ comprenant dans un premier cas l'ensemble des réactifs à une température par exemple de 120 à 200°C pendant une durée par exemple de 6 à 72 heures.

La solution de départ peut, comme on l'a déjà mentionné ci-dessus, ne comprendre dans un second cas, qu'une partie des réactifs nécessaires à la préparation du polyimide final, par exemple le mélange de départ peut ne comprendre que les composés (II) et/ou (II'), et (IV). Dans ce cas, on porte ce mélange à une température par exemple de 120 à 200°C pendant une durée par exemple de 6 à 72 heures, puis on laisse refroidir le mélange jusqu'à une température par exemple de 20 à 50°C et on ajoute le reste des réactifs par exemple les composés (III) et (II).

On porte ensuite la température du mélange à une température par exemple de 120 à 200°C pendant une durée par exemple de 6 à 72 heures.

Dans les deux cas, le chauffage a provoqué la cyclisation de l'amide en imide et l'on obtient en tant que produit final le polyimide de l'invention.

On arrête la polymérisation en refroidissant la solution par exemple jusqu'à la température ambiante. On verse ensuite, de préférence lentement, la solution par exemple sous très forte agitation dans un récipient contenant par exemple du méthanol ou de l'éthanol.

Le solide généralement fibreux qui précipite est séparé par exemple par filtration et est ensuite de préférence

lavé une ou plusieurs fois par exemple avec une quantité suffisante par exemple de méthanol.

Le polymère obtenu est ensuite séché de préférence à une température de 50 à 120°C par exemple dans une étuve à ventilation forcée pendant une durée suffisante.

La présente invention a également pour objet un film ou une membrane, comprenant le polyimide sulfoné décrit ci-dessus.

Les films ou membranes peuvent être préparés de manière classique par exemple par coulée, c'est-à-dire que le polymère selon l'invention est mis en solution dans un solvant adéquate tel que du crésol ou du phénol, puis coulé sur une surface plane telle qu'une plaque de verre, puis séché pour former un film d'une épaisseur par exemple de 5 a 200 µm.

Les films peuvent être utilisés pour préparer des membranes isolant en particulier les compartiments anodiques et cathodiques d'une pile à combustible pouvant fonctionner par exemple avec les systèmes suivants :

- hydrogène, alcools tels que méthanol, à l'anode ;
- oxygène, air, à la cathode.

La présente invention a également pour objet un dispositif de pile à combustible comprenant une ou plusieurs membranes comprenant le polyamide sulfoné selon l'invention.

Du fait de ses excellentes propriétés mécaniques, la membrane peut subir sans détériorations les contraintes (serrage, etc.) liées au montage dans un tel dispositif.

La pile à combustible peut par exemple correspondre au schéma déjà donné sur la figure 1, c'est-à-dire que la membrane selon l'invention est placée en (1) entre deux électrodes (11) par exemple en tissu de carbone platiné (ou traité par un autre métal noble), de préférence imprégnées d'un composé tel que le Nafion® ou le polyimide lui-même, dans le but d'avoir une électrode volumique.

Cet ensemble peut être ensuite disposé par exemple entre deux plaques en graphite étanche imprégné de résines, qui, d'une part, assurent la distribution de l'hydrogène (4) ou autre, côté anode (7), et d'autre part, de l'oxygène (5) côté cathode (8).

La pile peut comprendre également des moyens (non représentés) pour réguler la température tels que des plaques de cuivre thermostatées par des crayons chauffants en monocellule ou des échangeurs de chaleur en module, et des moyens pour réguler le fonctionnement de la pile et connectés sur le circuit extérieur (10) : ces moyens sont constitués par exemple par des régulateurs de débits, de température, de pression, et une charge électronique pour réguler le courant.

La température de la pile est généralement maintenue entre 50 et 80°C et dans ces conditions, elle produit par exemple un courant de 0,25 A/cm$^2$ avec une tension de 0,6V et ce sur une très longue durée pouvant atteindre jusqu'à 3000 heures, ce qui démontre les excellentes propriétés de stabilité thermique et autres de la membrane et ses excellentes propriétés électriques par comparaison avec les membranes de l'art antérieur, par exemple en Nation (0,25 A/cm$^2$ ; 0,7 V ; 5000 heures).

L'invention va maintenant être décrite en référence aux exemples suivants donnés à titre illustratif et non limitatif.

**Exemple 1**

La réaction de polycondensation est effectuée dans un réacteur en verre de 500 cm$^3$ équipé d'un système d'agitation à ancre, d'une entrée de gaz inerte tel que de l'azote et d'une sonde thermométrique. Un bain d'huile thermostaté est utilsé pour réguler la température du milieu réactionnel.

Le réacteur est chargé avec 250 g de m-crésol et 10 g (0,029 mole) d'acide 4,4' diamino-[1,1'-biphényl]-2,2'-disulfonique. Puis on introduit 30 g (0,096 mole) de 5,5'-oxy-bis-(1,3-isobenzofurandione).

Ce mélange réactionnel est porté à une température de 180°C pendant 4 heures. Durant cette période, la viscosité du milieu augmente progressivement.

On arrête ensuite le chauffage tout en maintenant l'agitation et on laisse refroidir le mélange réactionnel jusqu'à une température d'environ 50°C.

On ajoute alors 13,4 g (0,067 mole) de 4,4'-méthylène bis-benzèneamine en une seule fois avant de porter à nouveau la température du mélange à 180°C pendant environ deux heures, période durant laquelle la viscosité augmente rapidement.

On arrête la polymérisation en refroidissant la solution jusqu'à la température ambiante, puis en la versant lentement sous très forte agitation dans un récipient contenant deux litres de méthanol.

Le solide fibreux qui précipite est isolé par filtration et lavé deux fois avec deux litres de méthanol.

Le polymère ainsi obtenu est ensuite séché dans une étuve à ventilation forcée à 120°C pendant environ six heures.

Sa capacité d'échange ionique est de 1,15 m eq/g.

**Exemple 2**

Le procédé de l'exemple 1 est employé pour préparer un polyimide sulfoné en faisant réagir dans 220 g de m-crésol, 33,5 g (0,108 mole) de 5,5'-oxy-bis (1,3-isobenzofurandione), 7,5 g (0,021 mole) d'acide 4,4' diamino-[1,1'-biphényl]-2,2'disulfonique et 17,25 g de 4,4'-méthylène bis-benzène-amine.
Le polymère obtenu présente une capacité d'échange ionique de 0,8 meq/g.

**Exemple 3**

Le procédé de l'exemple 1 est employé pour préparer un polyimide sulfoné en faisant réagir dans 300 g de m-crésol en tant que solvant, 45 g (0,145 mole) de 5,5'-oxy-bis-(1,3-isobenzofurandione), 16,2 g (0,043 mole) d'acide 4,4' diamino-5,5' diméthyl-[1,1'-biphényl] -2,2'disulfonique et 20,25 g (0,102 mole) de 4,4' méthylène-bis-benzène-amine.
Le polymère ainsi obtenu présente une capacité d'échange ionique de 1,14 meq/g.

**Exemple 4**

Le montage de la réaction décrit à l'exemple 1 est utilisé pour la préparation d'un polyimide sulfoné.
Le réacteur est chargé avec un mélange de solvants composé de 210 g de phénol et 140 g de para-chloro-phénol.
On introduit ensuite en une seule fois 5 g (0,015 mole) d'acide 4,4' diamino-[1,1'-biphényl]-2,2'-disulfonique, 12,97 g (0,048 mole) de dianhydride 1,4,5,8-naphtalènetétracarboxylique et 6,7 g (0,034 mole) de 4,4'-oxy-benzène-amine.
Le mélange réactionnel est chauffé à 150°C pendant cinq heures.
Après refroidissement à 60°C, la solution est versée avec une forte agitation dans deux litres de méthanol.
Le solide fibreux qui se forme est isolé par filtration et traité deux fois avec 500 $cm^3$ de méthanol.
Le polymère ainsi obtenu est séché sous vide à 120°C pendant six heures.
Sa capacité d'échange ionique est de 1,28 meq/g.

**Exemple 5**

Le procédé de l'exemple 4 est utilisé pour préparer un polyimide sulfoné en faisant réagir dans un mélange de solvants composé de 180 g de phénol et 140 g de parachlorophénol, 8,32 g (0,0242 mole) d'acide 4,4' diamino-[1,1'-biphényl]-2,2'disulfonique, 12,975 g (0,048 mole) de dianhydride 1,4,5,8 naphtalène-tétracarboxylique et 8,08 g (0,024 mole) de 4,4'-[2,2,2-trifluoro (1-trifluorométhyl)-éthylidène]-benzène-amine.
Le polymère obtenu présente une capacité d'échange ioniqud de 1,73 meq/g.

**Exemple 6**

Cet exemple illustre comment les films de polyimide sulfoné selon la présente invention peuvent être utilisés, pour préparer des membranes isolant les compartiments anodique et cathodique d'une pile à combustible pouvant fonctionner avec de l'hydrogène et de l'oxygène à la cathode.
Une membrane de polyamide sulfoné selon l'invention (préparée à partir du polymère de l'exemple 1) avec une capacité d'échange ionique de 1,15 meq/g d'épaisseur 80 µm, est placée entre deux électrodes en tissu de carbone platiné (0,35 mg de Pt/$cm^2$) et imprégnés de Nafion® (0,8 mg/$cm^2$).
Cet ensemble est ensuite inséré entre deux plaques en graphite qui, d'une part, assurent la distribution de l'hydrogène côté anode et de l'oxygène côté cathode, et d'autre part assurent la conductivité électrique.
L'étanchéité du système est obtenue par des joints plats en élastomère "Viton" (non représentés). On utilise par exemple deux plaques en cuivre pour chauffer.
Une charge électronique permet de réguler le fonctionnement de la pile en tension ou en courant. L'expérience est réalisée à une température de 50°C avec une pression d'oxygène et d'hydrogène égale à 4 bars.
La membrane de polyimide sulfoné de type phtalique selon l'invention permet d'obtenir une intensité de courant de 500 mA/$cm^2$ pour une tension comprise entre 300 et 400 mV.

**Exemple 7 (COMPARATIF)**

Une membrane en Nafion®117 un polymère ayant la structure suivante

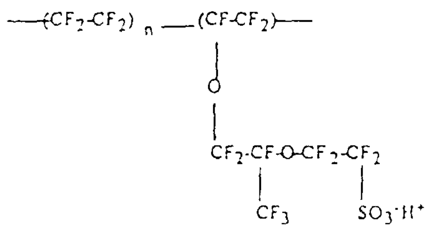

est utilisée comme référence et elle est testée dans les mêmes conditions que celles définiies à lexemple 6 pour la membrane en polyimide sulfoné de type phtalique selon l'invention.

La figure 2 qui représente les courbes de polarisation obtenues d'une part avec la membrane selon l'invention (trait plein) et d'autre part avec la membrane de référence en Nafion®117 (traits pointillés) permet de mettre en évidence les performances équivalentes, voire supérieuress obtenues avec la membrane selon l'invention.

**Exemple 8**

Une membrane de polyimide sulfoné de type phtalique (polymère de l'exemple 1) avec une capacité d'échange ionique de 1,15 meq/g, est installée dans une pile selon l'exemple 6.

La pile est mise en fonctionnement à une température maintenue à 50°C et l'on mesure un courant stable de 150 mA/cm$^2$ pour une tension de 400 mV, pendant plus de 400 heures.

**Exemple 9**

Une membrane de polyimide sulfoné de type phtalique selon l'invention (polymère de l'exemple 1) avec une capacité d'échange ionique de 1,15 meq/g est installée dans une pile selon l'exemple 6.

La pile est mise en fonctionnement à une température maintenue à 70°C et l'on mesure une tension de 600 mV, pour un courant de 200 mA/cm$^2$ qui décroît progressivement de 1,2 mV par heure.

**Exemple 10**

Une membrane de polyimide sulfoné de type naphtalénique selon l'invention (polymère de l'exemple 4) d'épaisseur 170 µm, ayant une capacité d'échange ionique de 1,28 meq/g, est placée dans une pile selon l'exemple 6.

La pile est mise en fonctionnement à une température maintenue à 70°C et on mesure un courant de 1 A/cm$^2$ avec une tension de 0,4 V.

**Exemple 11 (COMPARATIF)**

Une membrane en Nafion®117 est placée dans la même pile et est testée dans les mêmes conditions de fonctionnement que celles définies à l'Exemple 10 pour la membrane en polyimide sulfoné de type naphtalénique selon l'invention.

La figure 3 qui présente les courbes de polarisation obtenues d'une part avec la membrane selon l'invention (trait plein) et d'autre part avec la membrane de référence en Nafion®117 (traits pointillés) permet de mettre en évidence les performances équivalentes, voire supérieures, obtenues avec la membrane selon l'invention.

**Exemple 12**

Une membrane de polyimide sulfoné de type naphtalénique fluoré (polymère de l'exemple 5) dont l'épaisseur est de 150 µm est placée dans une pile selon l'exemple 6. La pile est mise en fonctionnement à une température maintenue à 70°C, et l'on mesure une tension de 650 mV pour un courant de 250 mA/cm$^2$ qui reste stable pendant plus de 2500 heures.

Cet exemple démontre de nouveau les qualités de durabilité supérieures des polymères selon l'invention, à savoir pouvant atteindre plusieurs milliers d'heures, ce qui est compatible avec une application, par exemple dans un

véhicule électrique où l'on demande une durabilité d'environ 3000 heures.

## Revendications

**1.** Polymère sulfoné caractérisé en ce qu'il comprend des motifs récurrents de formule ($I_n$)

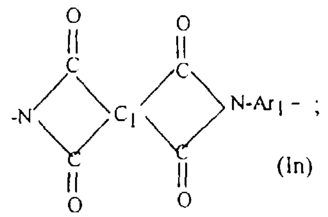

(In)

et des motifs récurrents de formule (Im)

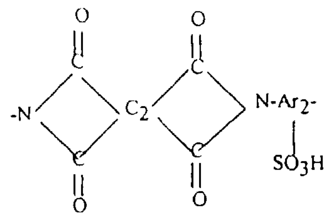

; (Im)

dans lesquelles :

- les groupes $C_1$ et $C_2$ peuvent être identiques ou différents et représentent chacun un groupe tétravalent comprenant au moins un cycle aromatique carboné éventuellement substitué ayant de 6 à 10 atomes de carbone et/ou un hétérocycle à caractère aromatique éventuellement substitué ayant de 5 à 10 atomes et comprenant un ou plusieurs hétéroatomes choisis parmi S, N et O ; $C_1$ et $C_2$ formant chacun avec les groupes imides voisins des cycles à 5 ou 6 atomes.
- Les groupes $Ar_1$ et $Ar_2$ peuvent être identiques ou différents et représentent chacun un groupe divalent comprenant au moins un cycle aromatique carboné éventuellement substitué ayant de 6 à 10 atomes de carbone et/ou un hétérocycle à caractère aromatique éventuellement substitué ayant de 5 à 10 atomes et comprenant un ou plusieurs hétéroatomes choisis parmi S, N et O ; au moins un desdits cycles aromatiques carbonés et/ou hétérocycle de $Ar_2$ étant en outre substitué par au moins un groupe acide sulfonique .

**2.** Polyimide sulfoné selon la revendication 1, caractérisé en ce qu'il répond à la formule générale suivante (I) :

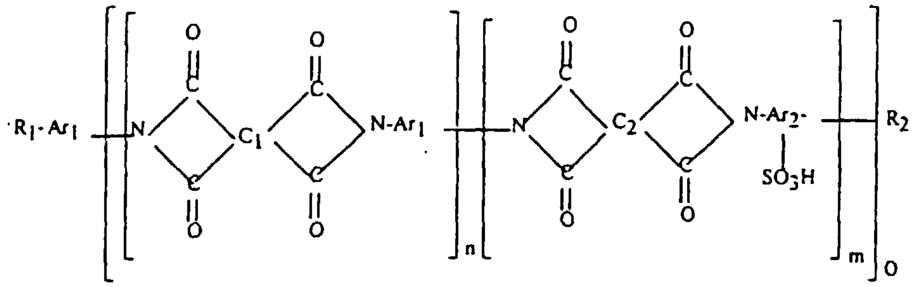

(I)

dans laquelle $C_1$, $C_2$, $Ar_1$ et $Ar_2$ ont la signification déjà donnée ci-dessus et où chacun des groupes $R_1$ et $R_2$ représente $NH_2$ ou un groupe de formule

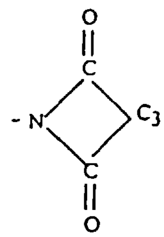

où $C_3$ est un groupe divalent comprenant au moins un cycle aromatique carboné éventuellement substitué ayant de 6 à 10 atomes de carbone et/ou un hétérocycle à caractère aromatique éventuellement substitué ayant de 5 à 10 atomes et comprenant un ou plusieurs hétéroatomes choisis parmi S, N et O ;

$C_3$ formant avec le groupe imide voisin un cycle à 5 ou 6 atomes; et dans laquelle m représente un nombre entier de 1 à 20, n représente un nombre entier de 1 à 30, et o représente un nombre entier de 1 à 10.

**3.** Polyimide selon la revendication 2, caractérisé en ce que les nombres m et n sont choisis de telle sorte que le poids moléculaire équivalent défini par le poids de polymère en gramme par équivalent acide sulfonique soit de 500 à 2500.

**4.** Polyimide selon la revendication 1 ou la revendication 2, caractérisé en ce que son poids moléculaire est de 10 000 à 100 000.

**5.** Polyimide selon la revendication 1 ou la revendication 2, caractérisé en ce que dans les formules (In), (Im) et (I), $C_1$ et $C_2$ peuvent être identiques ou différents et représentent chacun, un cycle benzénique éventuellement substitué, par un ou deux substituant(s) choisi(s) parmi les groupes alkyles et alkoxy de 1 à 10 C et les atomes d'halogène ; ou plusieurs cycles benzéniques éventuellement substitués par un ou plusieurs substituant(s) choisi (s) parmi les groupes alkyles et alkoxy de 1 à 10 C et les atomes d'halogène, reliés entre eux par une simple liaison ou par un groupe divalent.

- $C_1$ et $C_2$ peuvent également chacun représenter un groupe carboné polycyclique condensé éventuellement substitué par un ou plusieurs substituant(s) choisi(s) parmi les groupes alkyles et alkoxy de 1 à 10 C et les atomes d'halogène,
- $C_1$ et $C_2$ peuvent aussi représenter un hétérocycle ou un hétérocycle condensé, à caractère aromatique, cet hétérocycle étant éventuellement substitué par un ou plusieurs substituants choisis parmi les groupes alkyles et alkoxy de 1 à 10 C, et les atomes d'halogènes.
- $Ar_1$ et $Ar_2$ peuvent être identiques ou différents et représentent chacun par exemple un cycle benzénique divalent à attachement meta, ou para ; éventuellement substitué par un ou plusieurs substituants choisis parmi les groupes alkyles et alkoxy de 1 à 10 C et les atomes d'halogène ; ou plusieurs cycles benzéniques éventuellement substitués par un ou plusieurs substituants choisis parmi les groupes alkyles et alkoxy de 1 à 10 C et les atomes d'halogène , reliés entre eux par une simple liaison ou par un groupe divalent.
- $Ar_1$ et $Ar_2$ peuvent également chacun représenter un groupe carboné polycyclique condensé éventuellement substitué par un ou plusieurs substituant(s) choisi(s) parmi les groupes alkyles et alkoxy de 1 à 10 C et les atomes d'halogène,
- $Ar_1$ et $Ar_2$ peuvent aussi représenter un hétérocycle ou un hétérocycle condensé, à caractère aromatique, cet hétérocycle étant éventuellement substitué par un ou plusieurs substituant(s) choisi(s) parmi les groupes alkyles et alkoxy de 1 à 10 C, et les atomes d'halogènes.

**6.** Polyimide selon la revendication 2, caractérisé en ce que $C_3$ est un cycle benzénique ou naphtalénique éventuellement substitué par un ou plusieurs substituant(s) choisi(s) parmi les groupes alkyles et alkoxy de 1 à 10 C et les atomes d'halogène.

**7.** Polyimide selon la revendication 5, caractérisé en ce que ledit groupe divalent est choisi parmi :

- un groupe divalent dérivé d'un groupe alkyle linéaire ou ramifié de 1 à 10 C éventuellement substitué, par un

ou plusieurs halogènes choisis parmi F, Cl, Br et I et/ou par un ou plusieurs groupes hydroxyle(s).

- un hétéroatome choisi parmi O, S ;
- un groupe

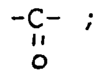

un groupe

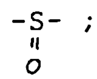

un groupe

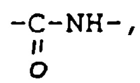

un groupe

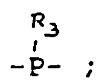

un groupe

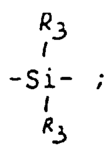

un groupe

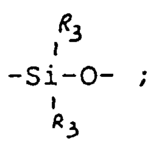

où $R_3$ est choisi parmi les groupes alkyles de 1 à 10 C.

**8.** Polyimide selon la revendication 5, caractérisé en ce que $C_1$ est un cycle benzénique et $C_2$ est un ensemble de deux cycles benzéniques reliés entre eux par un pont oxygène.

**9.** Polyimide selon la revendication 5, caractérisé en ce que $C_1$ est constitué par des cycles benzéniques reliés par un ou des groupe(s) perfluoroalkylène(s) et $C_2$ est constitué par des cycles benzéniques reliés par un ou des groupe(s) perfluoroalkyle(s) divalents ou perfluoroalkylène(s).

**10.** Polyimide selon la revendication 5, caractérisé en ce que $C_1$ est un cycle benzénique et $C_2$ est un cycle naphtalénique.

**11.** Polyimide selon la revendication 5, caractérisé en ce que $C_1$ et $C_2$ sont tous deux des cycles naphtaléniques.

**12.** Polyimide selon la revendication 5, caractérisé en ce que $Ar_1$ est un groupe diphénylméthane et $Ar_2$ est un groupe biphényl-disulfonique.

**13.** Polyimide selon la revendication 5, caractérisé en ce que $Ar_1$ est un groupe benzénique et $Ar_2$ un groupe biphényl-disulfonique.

**14.** Polyimide selon la revendication 5, caractérisé en ce que $Ar_1$ est un groupe diphényléther et $Ar_2$ est un groupe biphényl-disulfonique.

**15.** Membrane comprenant un polyimide selon la revendication 1 ou la revendication 2.

**16.** Dispositif de pile à combustible comprenant au moins une membrane selon la revendication 15.

**Patentansprüche**

**1.** Sulfoniertes Polymer, dadurch gekennzeichnet, daß es sich wiederholende Strukturmotive der Formel ($I_n$)

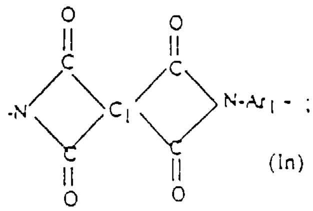

(In)

und sich wiederholende Strukturmotive der Formel ($I_m$)

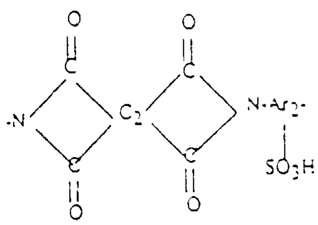

(Im)

enthält, in denen:

- die Gruppen $C_1$ und $C_2$ identisch oder verschieden sein können und je eine vierwertige Gruppe darstellen, umfassend mindestens einen gegebenenfalls substituierten aromatischen Kohlenstoffring, der 6 bis 10 Kohlenstoffatome hat, und/oder einen gegebenenfalls substituierten Heterocyclus von aromatischer Natur, der 5 bis 10 Atome hat und ein oder mehrere unter S, N und O gewählte Heteroatome umfaßt, wobei $C_1$ und $C_2$ beide mit den benachbarten Imidgruppen Ringe von 5 oder 6 Atomen bilden.
- Die Gruppen $Ar_1$ und $Ar_2$ können identisch oder verschieden sein und stellen je eine zweiwertige Gruppe dar, umfassend mindestens einen gegebenenfalls substituierten aromatischen Kohlenstoffring, der 6 bis 10 Kohlenstoffatome hat, und/oder einen gegebenenfalls substituierten Heterocyclus von aromatischer Natur, der 5 bis 10 Atome hat und ein oder mehrere unter S, N und O gewählte Heteroatome umfaßt, wobei mindestens einer der genannten aromatischen Kohlenstoff- und/oder heterocyclischen Ringe von $Ar_2$ ferner mit mindestens einer Sulfonsäuregruppe substituiert ist.

**2.** Sulfoniertes Polyimid nach Anspruch 1, dadurch gekennzeichnet, daß es der folgenden allgemeinen Formel (I) entspricht:

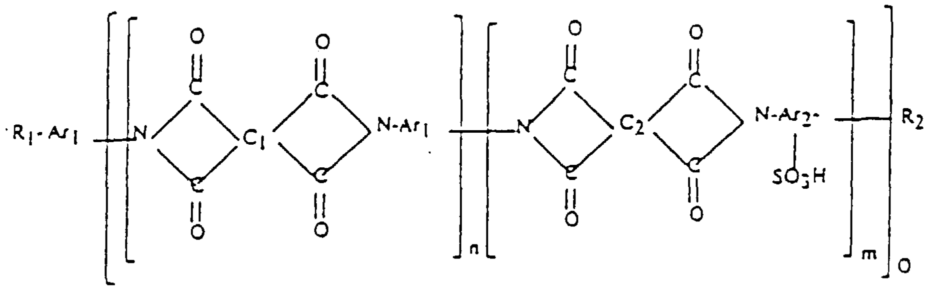

(I)

worin $C_1$, $C_2$, $Ar_1$ und $Ar_2$ die bereits oben gegebene Bedeutung haben und wo jede der Gruppen $R_1$ und $R_2$ für $NH_2$ oder eine Gruppe der Formel:

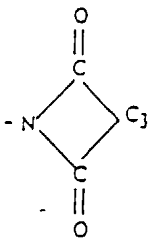

steht, wo $C_3$ eine zweiwertige Gruppe ist, umfassend mindestens einen gegebenenfalls substituierten aromatischen Kohlenstoffring, der 6 bis 10 Kohlenstoffatome hat, und/oder einen gegebenenfalls substituierten Heterocyclus von aromatischer Natur, der 5 bis 10 Atome hat und ein oder mehrere unter S, N und O gewählte Heteroatome umfaßt, wobei $C_3$ mit der benachbarten Imidgruppe einen Ring von 5 oder 6 Atomen bildet,

und worin m eine ganze Zahl von 1 bis 20 darstellt, n eine ganze Zahl von 1 bis 30 darstellt und o eine ganze Zahl von 1 bis 10 darstellt.

3. Polyimid nach Anspruch 2, dadurch gekennzeichnet, daß die Zahlen m und n derart gewählt sind, daß das äquivalente Molekulargewicht, definiert durch das Gewicht des Polymers in Gramm pro Äquivalent Sulfonsäure, 500 bis 2500 beträgt.

4. Polyimid nach Anspruch 1 oder Anspruch 2, dadurch gekennzeichnet, daß sein Molekulargewicht 10 000 bis 100 000 beträgt.

5. Polyimid nach Anspruch 1 oder Anspruch 2, dadurch gekennzeichnet, daß in den Formeln ($I_n$), ($I_m$) und (I) die $C_1$ und $C_2$ identisch oder verschieden sein können und je einen Benzolring, gegebenenfalls substituiert mit einem oder zwei unter den Alkyl- oder Alkoxygruppen von 1 bis 10 C-Atomen und den Halogenatomen gewählten Substituenten, oder mehrere Benzolringe, gegebenenfalls substituiert mit einem oder mehreren unter den Alkyl- oder Alkoxygruppen von 1 bis 10 C-Atomen und den Halogenatomen gewählten Substituenten und untereinander durch eine Einfachbindung oder durch eine zweiwertige Gruppe verbunden, darstellen.

- $C_1$ und $C_2$ können ebenso je eine kondensierte polycyclische Kohlenstoffgruppe darstellen, gegebenenfalls substituiert mit einem oder mehreren unter den Alkyl- und Alkoxygruppen von 1 bis 10 C-Atomen und den Halogenatomen gewählten Substituenten, darstellen,
- $C_1$ und $C_2$ können auch einen Heterocyclus oder einen kondensierten Heterocyclus von aromatischer Natur darstellen, wobei dieser Heterocyclus gegebenenfalls mit einem oder mehreren unter den Alkyl- und Alkoxygruppen mit 1 bis 10 C-Atomen und den Halogenatomen gewählten Substituenten substituiert ist.
- $Ar_1$ und $Ar_2$ können identisch oder verschieden sein und bedeuten beispielsweise je einen zweiwertigen Benzolring mit Bindung in meta- oder para-Stellung, gegebenenfalls substituiert mit einem oder mehreren unter den Alkyl- und Alkoxygruppen von 1 bis 10 C-Atomen und den Halogenatomen gewählten Substituenten, oder mehrere Benzolringe, gegebenenfalls substituiert mit einem oder mehreren unter den Alkyl- und Alkoxygruppen von 1 bis 10 C-Atomen und den Halogenatomen gewählten Substituenten und untereinander durch eine Einfachbindung oder durch eine zweiwertige Gruppe verbunden.

- $Ar_1$ und $Ar_2$ können ebenso je eine kondensierte polycyclische Kohlenstoffgruppe darstellen, gegebenenfalls substituiert mit einem oder mehreren unter den Alkyl- und Alkoxygruppen von 1 bis 10 C-Atomen und den Halogenatomen gewählten Substituenten,
- $Ar_1$ und $Ar_2$ können auch einen Heterocyclus oder einen kondensierten Heterocyclus von aromatischer Natur darstellen, wobei dieser Heterocyclus gegebenenfalls mit einem oder mehreren unter den Alkyl- und Alkoxygruppen von 1 bis 10 C-Atomen und den Halogenatomen gewählten Substituenten substituiert ist.

**6.** Polyimid nach Anspruch 2, dadurch gekennzeichnet, daß $C_3$ ein Benzol- oder Naphtalinring ist, gegebenenfalls substituiert mit einem oder mehreren unter den Alkyl- und Alkoxygruppen von 1 bis 10 C-Atomen und den Halogenatomen gewählten Substituenten.

**7.** Polyimid nach Anspruch 5, dadurch gekennzeichnet, daß die genannte zweiwertige Gruppe gewählt ist unter:

- einer zweiwertigen Gruppe, abgeleitet von einer linearen oder verzweigten Alkylgruppe von 1 bis 10 C-Atomen, gegebenenfalls substituiert mit einem oder mehreren unter F, Cl, Br und I gewählten Halogenen und/oder mit einer oder mehreren Hydroxylgruppen;
- einem Heteroatom, gewählt unter O, S;
- einer Gruppe

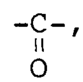

einer Gruppe

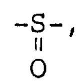

einer Gruppe

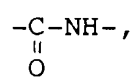

einer Gruppe

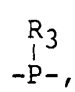

einer Gruppe

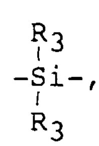

einer Gruppe

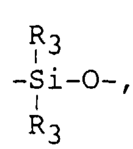

wo $R_3$ unter den Alkylgruppen von 1 bis 10 C-Atomen gewählt ist.

**8.** Polyimid nach Anspruch 5, dadurch gekennzeichnet, daß $C_1$ ein Benzolring ist und $C_2$ eine Einheit von zwei Benzolringen ist, die untereinander durch eine Sauerstoffbrücke verbunden sind.

**9.** Polyimid nach Anspruch 5, dadurch gekennzeichnet, daß $C_1$ aus Benzolringen besteht, die durch eine oder mehrere Perfluoralkylengruppen verbunden sind, und $C_2$ aus Benzolringen besteht, die durch eine oder mehrere zweiwertige Perfluoralkylgruppen oder Perfluoralkylengruppen verbunden sind.

**10.** Polyimid nach Anspruch 5, dadurch gekennzeichnet, daß $C_1$ ein Benzolring ist und $C_2$ ein Naphtalinring ist.

**11.** Polyimid nach Anspruch 5, dadurch gekennzeichnet, daß $C_1$ und $C_2$ beide Naphtalinringe sind.

**12.** Polyimid nach Anspruch 5, dadurch gekennzeichnet, daß $Ar_1$ eine Diphenylmethangruppe ist und $Ar_2$ eine Biphenyldisulfonsäure-Gruppe ist.

**13.** Polyimid nach Anspruch 5, dadurch gekennzeichnet, daß $Ar_1$ eine Benzolgruppe ist und $Ar_2$ eine Biphenyl-disulfonsäure-Gruppe ist.

**14.** Polyimid nach Anspruch 5, dadurch gekennzeichnet, daß $Ar_1$ eine Diphenylethergruppe ist und $Ar_2$ eine Biphenyl-disulfonsäure-Gruppe ist.

**15.** Membran, enthaltend ein Polyimid nach Anspruch 1 oder Anspruch 2.

**16.** Vorrichtung für eine Brennstoffzelle, enthaltend mindestens eine Membran nach Anspruch 15.

## Claims

**1.** A sulphonated polymer characterised in that it comprises repeating structures of formula (In)

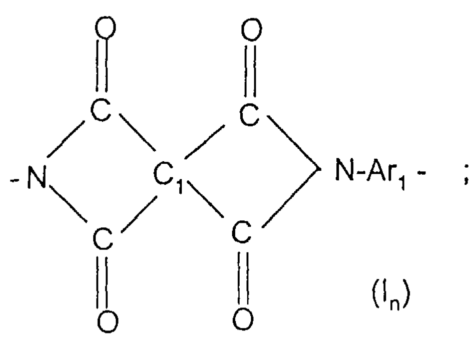

$(I_n)$

and repeating structures of formula $(I_m)$

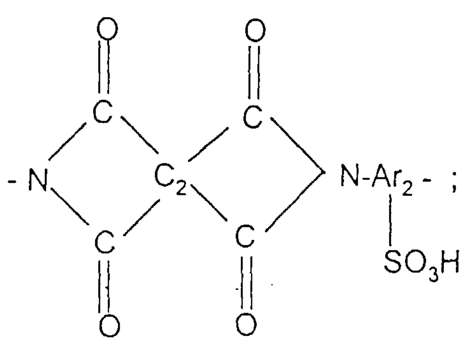

$(I_m)$

in which

- the groups $C_1$ and $C_2$ can be identical or different and each represent a tetravalent group that includes at least aromatic carbon ring possibly substituted and having from 6 to 10 atoms of carbon and/or a heterocyclic ring with aromatic character, possibly substituted and having from 5 to 10 atoms and including one or more heteroatoms chosen from among S, N, and O ; $C_1$ and $C_2$ each forming with the neighbouring imide groups rings with 5 or 6 atoms.
- the $Ar_1$ and $Ar_2$ groups can be identical or different and each represent a divalent group that includes at least one aromatic carbon ring possibly substituted and having from 6 to 10 atoms of carbon and/or a heterocyclic ring with aromatic character, possibly substituted and having from 5 to 10 atoms and including one or more heteroatoms chosen from among S, N and O ; at least one of said aromatic carbon rings and/or heterocyclic rings of $Ar_2$ being, in addition substituted by at least one sulphonic acid group.

**2.** A sulphonated polyimide according to Claim 1, characterised in that it corresponds to the following general formula (I) :

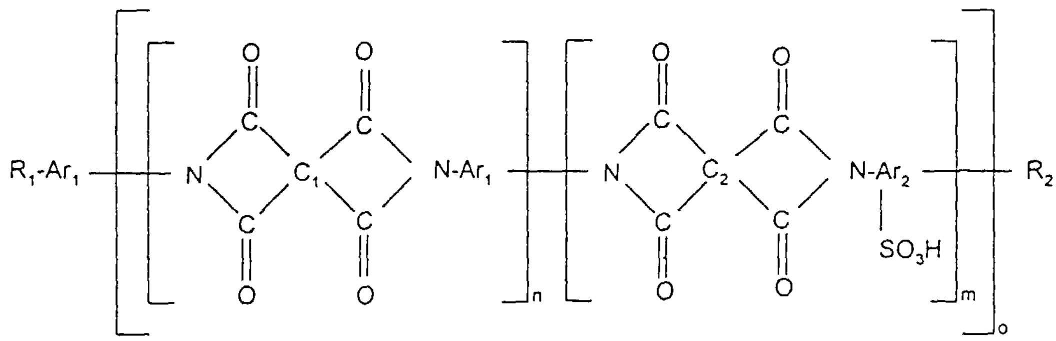

in which $C_1$, $C_2$, $Ar_1$ and $Ar_2$ have the meanings already given to them above and where each of the groups $R_1$ and $R_2$ represent $NH_2$ or a group of formula

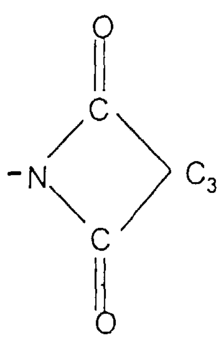

where $C_3$ is a divalent group that includes at least one aromatic carbon ring possibly substituted and having from 6 to 10 carbon atoms and/or a heterocyclic ring with aromatic character, possibly substituted and having from 5 to 10 atoms and including one or more heteroatoms chosen from among S, N and 0.
$C_3$ forming with the neighbouring imide group a ring with 5 or 6 atoms and in which m represents a whole number from 1 to 20, n represents a whole number from 1 to 30 and o represents a whole number from 1 to 10.

**3.** Polyimide according to claim 2, characterized in that the numbers m and n are chosen in such a way that the equivalent molecular weight, defined as the weight of the polymer in grams per equivalent of sulphonic acid, is from 500 to 2500.

**4.** Polyimide according to claim 1 or claim 2, characterized in that its molecular weight is from 10,000 to 100,000.

**5.** Polyimide according to claim 1 or claim 2, characterized in that in the formulae (In), (Im) and (I), $C_1$ and $C_2$ can be identical or different and each represent a benzene ring, possibly substituted by one or two substituents chosen from among alkyl and alkoxy groups with 1 to 10 C atoms and halogen atoms; or several benzene rings, possibly substituted by one or more substituents chosen from among alkyl and alkoxy groups with 1 to 10 C atoms and halogen atoms, linked to one another by a single bond or by a divalent group.

- $C_1$ and $C_2$ can also each represent a condensed carbon polycyclic group, possibly substituted by one or more substituents chosen from among alkyl and alkoxy groups with 1 to 10 C atoms, and halogen atoms,
- $C_1$ and $C_2$ can also represent a heterocyclic group or a condensed heterocyclic group, with aromatic character, this heterocyclic group possibly being substituted by one or more substituents chosen from among the alkyl and alkoxy groups with from 1 to 10 C atoms and the halogen atoms.
- $Ar_1$ and $AR_2$ can be identical or different and reach represent, for example, a divalent benzene ring with meta or para links; possibly substituted by one or more substituents chosen from among the alkyl and alkoxy groups with from 1 to 10 C atoms and the halogen atoms; or several benzene rings, possibly substituted by one or more substituents chosen from among the alkyl and alkoxy groups with from 1 to 10 C atoms and the halogen atoms, linked to one another by a single bond or by a divalent group.
- $Ar_1$ and $AR_2$ can also each represent a condensed carbon polycyclic group possibly substituted by one or more substituents chosen from among alkyl and alkoxy groups with 1 to 10 C atoms, and the halogen atoms,
- $Ar_1$ and $Ar_2$ can also each represent a heterocyclic group or a condensed heterocyclic group, with aromatic character, this heterocyclic group possibly being substituted by one or more substituents chosen from among the alkyl and alkoxy groups with from 1 to 10 C atoms and halogen atoms.

**6.** Polyimide according to claim 2, characterized in that $C_3$ is a benzene or naphthalene ring possibly substituted by one or more substituents chosen from among alkyl and alkoxy groups with 1 to 10 C atoms, and the halogen atoms.

**7.** Polyimide according to claim 5, characterized in that said divalent group is chosen from among:

- a divalent group derived from a straight chain or branched chain alkyl group with 1 to 10 C atoms, possibly substituted, by one or more halogens chosen from among F, Cl, Br and I and/or by one or more hydroxyl groups,
- a heteroatom chosen from among O, S
- a

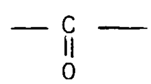

group; a

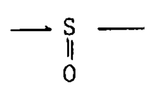

group; a

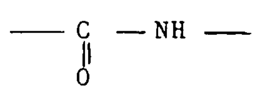

group;

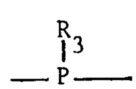

group; a

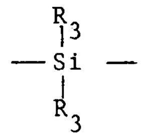

group; a

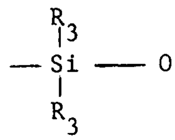

group where $R_3$ is chosen from among alkyl groups with from 1 to 10 carbon atoms.

**8.** Polyimide according to claim 5, characterized in that $C_1$ is a benzene ring and $C_2$ is a group of two benzene rings linked to one another by an oxygen bridge.

**9.** Polyimide according to claim 5, characterized in that $C_2$ is made up of benzene rings linked by one or more perfluoroalkylene groups and $C_2$ is made up of benzene rings linked by one or more divalent perfluoroalkyl groups or perfluoroalkylene groups.

**10.** Polyimide according to claim 5, characterized in that $C_1$ is a benzene ring and $C_2$ is a naphthalene ring.

**11.** Polyimide according to claim 5, characterized in that $C_1$ and $C_2$ are both naphthalene rings.

**12.** Polyimide according to claim 5, characterized in that $Ar_1$ is a diphenylmethane group and $Ar_2$ is a biphenyl disulphonic acid group.

**13.** Polyimide according to claim 5, characterized in that $Ar_1$ is a benzene group and $Ar_2$ is a biphenyl disulphonic acid group.

**14.** Polyimide according to claim 5, characterized in that $Ar_1$ is a diphenyl ether group and $Ar_2$ is a biphenyl disulphonic acid group.

**15.** Membrane comprising a polyimide according to claim 1 or claim 2.

**16.** Fuel cell device comprising at least one membrane according to claim 15.

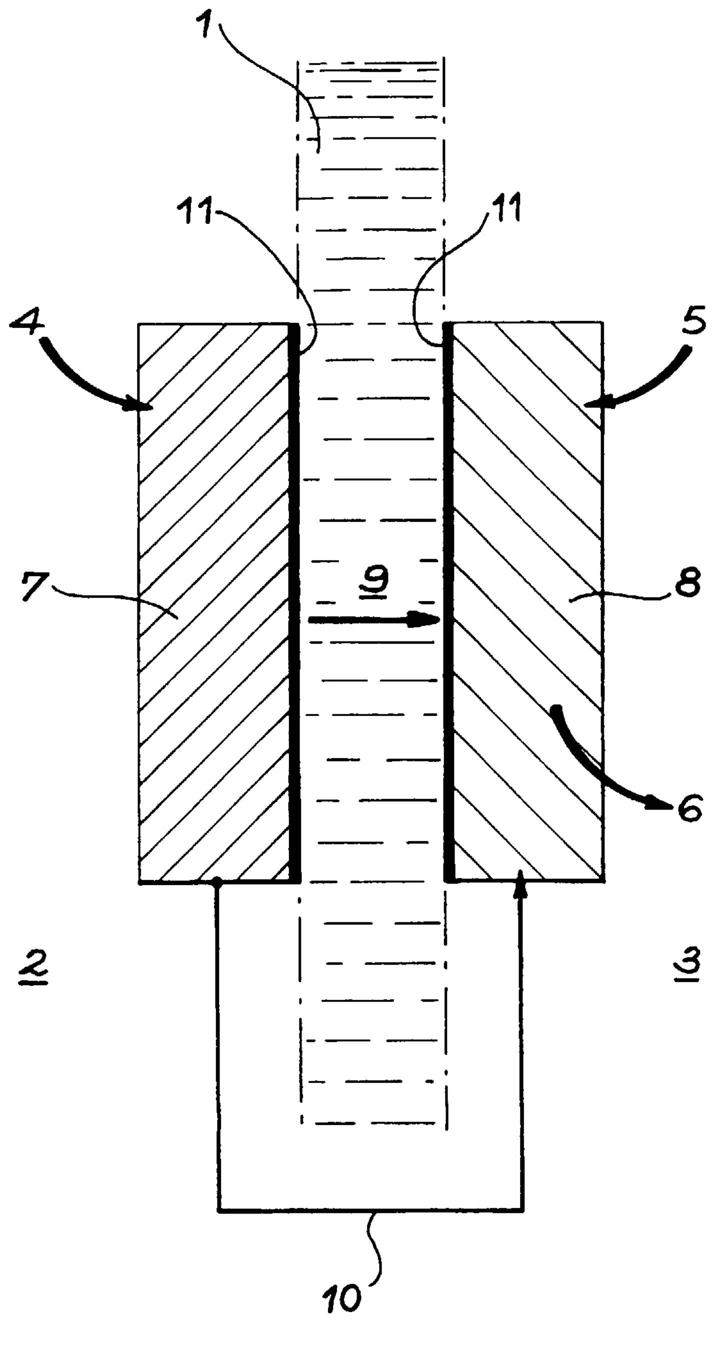


FIG. 1

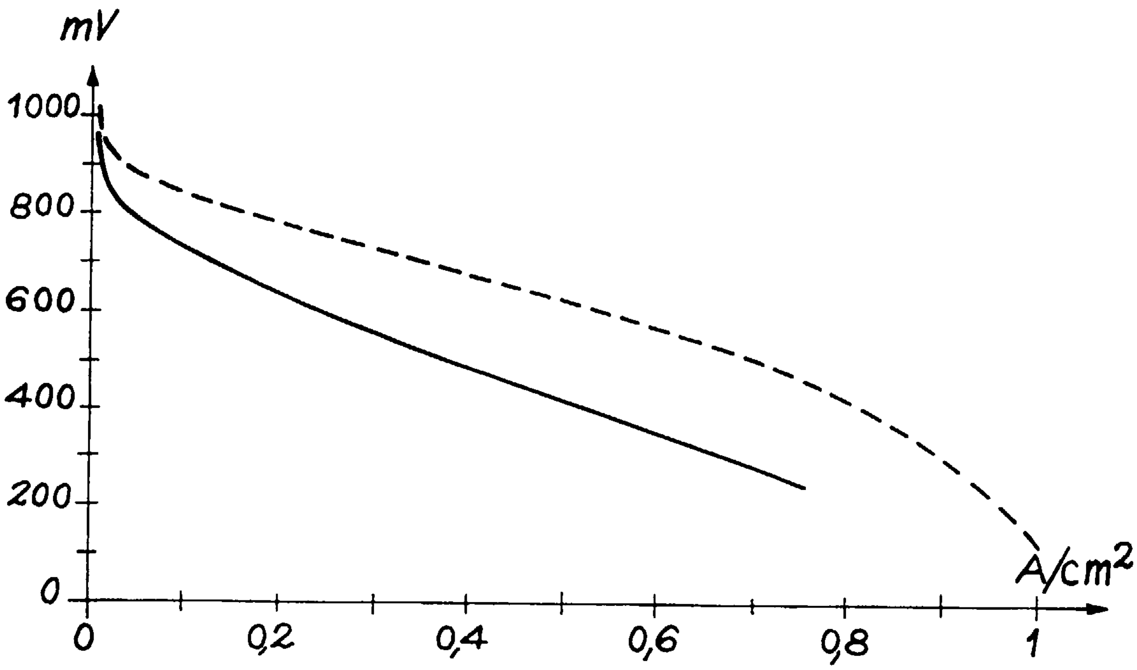
mV
1000
800
600
400
200
0
0
0,2
0,4
0,6
0,8
1
A/cm2

FIG. 2

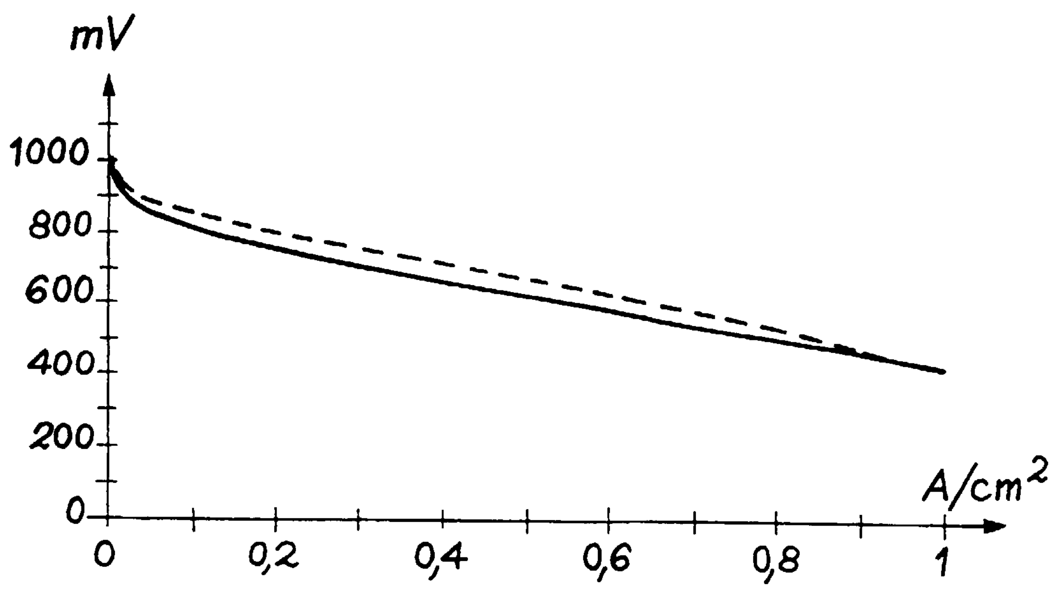
mV
1000
800
600
400
200
0
0
0,2
0,4
0,6
0,8
1
A/cm2

FIG. 3